(19) Europäisches Patentamt
European Patent Office
Office européen des brevets

(11) EP 2 604 640 B1

(12) **EUROPÄISCHE PATENTSCHRIFT**

(45) Veröffentlichungstag und Bekanntmachung des Hinweises auf die Patenterteilung:
**08.07.2015 Patentblatt 2015/28**

(51) Int Cl.:
***C08G 63/80*** (2006.01) ***C08G 63/85*** (2006.01)

(21) Anmeldenummer: **11009828.2**

(22) Anmeldetag: **13.12.2011**

(54) **Verfahren zur Herstellung aliphatischer Polyester**

Method for producing aliphatic polyesters

Procédé de fabrication de polyester aliphatique

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**19.06.2013 Patentblatt 2013/25**

(73) Patentinhaber: **Uhde Inventa-Fischer GmbH
13509 Berlin (DE)**

(72) Erfinder:
- **Hess, Christopher, Dr.
16567 Schönfliess (DE)**
- **Staudenmayer, Hans
13591 Berlin (DE)**

(74) Vertreter: **Pfenning, Meinig & Partner GbR
Patent- und Rechtsanwälte
Theresienhöhe 11a
80339 München (DE)**

(56) Entgegenhaltungen:
**EP-A1- 0 703 260 EP-A1- 2 228 399**

- **DATABASE WPI Week 201064 Thomson Scientific, London, GB; AN 2010-L62058 XP002676274, & JP 2010 202770 A (HITACHI PLANT ENG&CONSTR CO LTD) 16. September 2010 (2010-09-16)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung aliphatischer Polyester in einem zweistufigen Verfahren. Dabei werden in einer ersten Stufe zu einem Vorkondensat aus einer aliphatischen Dicarbonsäure oder eine einer Mischung aliphatischer Dicarbonsäuren und einem aliphatischen Dialkohol oder einer Mischung aliphatischer Dialkohole weitere monomere Bestandteile, d.h. weitere aliphatische Dicarbonsäuren sowie weiterer aliphatischer Dialkohol zugegeben, wobei ein Polyester-Prepolymer erhalten wird. In einem weiteren Schritt erfolgt eine Polykondensation des in der ersten Stufe erhaltenen Prepolymers.

Grundsätzlich ist die Herstellung aliphatischer Polyester aus den unterschiedlichsten Ausgangsrohstoffen schon seit den 1930er Jahren bekannt. Insbesondere in Veröffentlichungen von W.H. Carothers (u.a. Chem. Reviews 8 (1931) 353 - 401) oder in entsprechenden Patenten (US 2,012,267 bzw. US 2,071,250) wird u.a. die Herstellung von Polyethylensuccinat, Polypropylensuccinat oder Polyhexamethylensuccinat beschrieben.

Ein Beispiel für ein nach diesem Verfahren hergestellter aliphatischer Polyester ist das Polybutylensuccinat (PBS, Polybutylenbernsteinsäure, CAS# 110-15-6). Hierbei handelt es sich um ein thermoplastisches Polymer mit einem Schmelzpunkt von ca. 118 °C. PBS kann beispielsweise durch Polykondensation von Bernsteinsäure (engl.: succinc acid) und 1,4-Butandiol (BDO) hergestellt werden. Als Biopolymer ist PBS biologisch abbaubar und kann beispielsweise auf industriellen Kompostieranlagen entsorgt werden. Zudem ist PBS teilweise bzw. ganz aus nachwachsenden Rohstoffen zugänglich.

Aus dem Stand der Technik sind beispielsweise folgende Verfahren zur Herstellung von PBS bekannt:

a) Bernsteinsäure und Butandiol werden exakt eingewogen und gemeinsam direkt vorgelegt und erhitzt. Unter Abdestillation von Wasser entsteht das Vorkondensat, das anschließend polykondensiert wird. Nachteilig hierbei ist,d dass das Verfahren üblicherweise nur in Batch-Polykondensations-Anlagen durchführbar ist.

b) Es wird ein zuvor hergestelltes Vorköndensat vorgelegt und Bernsteinsäure und Butandiol zugegeben. Beim Erhitzen der Mischung schmilzt das Vorkondensat und es ergibt sich ein Reaktionsmedium, in dem sich insbesondere die Bernsteinsäure gut löst und darin vorteilhaft mit dem Butandiol zur Reaktion gebracht werden kann.

c) Aus Patenten der Firma Hitachi ist die Vorlage eines Vorkondensats und Zugabe einer Paste bekannt. Dabei wird zunächst eine Paste (pastöse Mischung/Suspension von fester, kristalliner Bernsteinsäure und Butandiol) durch Dosierung und Mischung der Rohstoffe hergestellt. Die so entstandene Paste muss ständig gerührt werden und bis zur Zugabe zur Reaktion oder Zugabe zu einem Vorkondensat z.B. auch ein einer Kreislauf/Zirkulationsleitung gehalten werden, damit sich ihre Zusammensetzung (Molverhältnis) durch die Sedimentation von Bernsteinsäure oder der Separation von Butandiol nicht ändert.

Die US 2006/0155099 A1 offenbart ein Verfahren zur Herstellung eine bioabbaubaren Copolyester, bei dem zunächst eine aromatische dicaboxylische Verbindung mit einem ersten aliphatischen Glykol zur Reaktion gebracht wird, das hierbei entstandene aromatische Prepolymer mit einer zweiten aromatischen dicaboxylischen Verbindung und einem zweiten aliphatischen Glykol umgesetzt wird, um ein erstes Reaktionsprodukt zu erhalten; im Anschluss wird in einem weiteren Schritt dieses erste Reaktionsprodukt mit einer aliphatischen dicaboxylischen Komponente umgesetzt, um ein zweites Reaktionsprodukt zu erhalten. Abschließend erfolgt eine Polykondensation des zweiten Reaktionsproduktes. Die US 2006/0155099 A1 beschreibt somit insbesondere ein kontinuierliches Verfahren zur Herstellung eines biodekradablen Copolyester, wobei sich allerdings die dort vorgeschlagenen Verfahrensweise nicht auf ein Herstellungsverfahren von aliphatischen Polyestern oder Copolyestern übertragen lässt.

Aus der US 6,399,716 B2 ist ein Verfahren zur Herstellung eines teilaromatischen Copolyesters bekannt, bei dem in einem ersten Schritt ein aliphatisches Prepolymer hergestellt und in einem zweiten Schritt mit einer aromatischen Dicarbonsäure und einem aliphatischen Glykol umgesetzt wird. Abschließend erfolgt eine zweistufige Polykondensation des in den ersten beiden Stufen hergestellten Reaktionproduktes. Die monomeren Bestandteile werden dabei unmittelbar zum Prepolymeren aufgegeben.

Die EP 1 882 712 A1 betrifft einen aus Biomasse erhaltenen Polyester, und beschreibt insbesondere dessen Aufbau sowie ein Verfahren zur Herstellung dieses biomassebasierenden Polyesters.

Aus der US 2010/0305297 A1 ist ein Verfahren zur Herstellung von Copolyestern bekannt, bei dem die Edukte in eine Vorkondensationsstufe aufgegeben und dort verestert werden. Die erhaltenen Veresterungsprodukte werden abschließend in mehreren nacheinander folgenden Stufen polykondensiert.

Aus der JP 2010-254812 A sowie aus der JP 2010-202770 A ist ein Verfahren zur Herstellung von PBS bzw. eine Vorrichtung zur Herstellung von PBS bekannt, bei denen in einer ersten Stufe ein Aufschlemmung aus den Ausgangsstoffen, d.h. Bernsteinsäure und 1,4-Butanediol, zu einem Oligomer umgesetzt und das erhaltene Oligomer anschließend durch Polykondensation zum Polyester aufgebaut wird. Nachteilig hierbei ist, dass die eingesetzte Aufschlämmung aus den Edukten zu Sedimentation der in der Aufschlämmung enthaltenen Bernsteinsäure führt, wodurch der Prozess sehr störanfällig und wartungsintensiv wird, da gegebenenfalls Bernsteinsäureablagerungen aus den verwendeten Apparaturen entfernt werden müssen.

Aufgabe der vorliegenden Erfindung ist es, ein Verfahren anzugeben, mit dem auf einfache und kostengünstige Art und Weise Polyester bzw. Copolyester, insbesondere PBS, herstellbar sind.

Diese Aufgabe wird mit den Merkmalen des Patentanspruchs 1 gelöst. Die jeweiligen abhängigen Patentansprüche stellen dabei vorteilhafte Weiterbildungen dar.

Erfindungsgemäß wird somit ein Verfahren zur Herstellung eines Polyesters oder Copolyesters angegeben, bei dem

a) mindestens eine aliphatische Dicarbonsäure mit 2 bis 12 Kohlenstoffatomen und/oder hiervon abgeleitete Säureanhydride und mindestens ein aliphatischer Alkohol mit 2 bis 12 Kohlenstoffatomen und mindestens zwei Hydroxylfunktionalitäten vermischt werden und mittels einer geeigneten Temperaturerhöhung die Dicarbonsäure im Dialkohol gelöst wird, wobei die Lösung bei Temperaturen von 100°C bis 250°C hergestellt wird,

b) die in Schritt a) erhaltene Lösung zu einem mindestens einen Diester und/oder mindestens einen Oligoester enthaltenden Veresterungsprodukt, das aus mindestens einer aliphatischen Dicarbonsäure mit mindestens einem aliphatischen Alkohol erhalten wurde, gegeben und dort zur Reaktion gebracht wird.

Die erfindungsgemäß eingesetzten aliphatischen Dicarbonsäuren mit 2 bis 12 Kohlenstoffatomen können dabei linear oder verzweigt aliphatische Dicarbonsäuren darstellen. Ebenso können von den aliphatischen Dicarbonsäuren abgeleitete Säureanhydride eingesetzt werden. Die Säureanhydride können dabei beispielsweise zyklische oder gemischte Säureanhydride darstellen. Ebenso ist eine Mischung aus den genannten aliphatischen Dicarbonsäuren und den abgeleiteten Säureanhydriden denkbar. Zudem ist es möglich, dass die aliphatischen Dicarbonsäuren bzw. deren abgeleiteten Säureanhydride als Reinsubstanz eingesetzt werden, auch möglich ist, dass mehr als eine aliphatische Dicarbonsäure, beispielsweise als Gemisch mehrerer Dicarbonsäuren verwendet wird.

Der erfindungsgemäß eingesetzte aliphatische Alkohol mit 2-12 Kohlenstoffatomen kann dabei ebenso einen linearen oder verzweigten aliphatischen Grundkörper aufweisen. Bevorzugt ist der aliphatische Alkohol ein Glykol, d.h. weist zwei Hydrofunktionalitäten auf. Die Hydrofunktionalitäten sind dabei bevorzugt primäre oder sekundäre, insbesondere primäre Hydrofunktionalitäten.

Das erfindungsgemäß in Stufe b) eingesetzte Veresterungsprodukt kann einen Diester bzw. einen Oligoester enthalten, wobei der Diester bzw. der Oligoester das Kondensationsprodukt aus mindestens einer aliphatischen Dicarbonsäure mit mindestens einem aliphatischen Alkohol darstellen. Beim Diester sind dabei beide Caboxylgruppen der aliphatischen Dicarbonsäure mit einem aliphatischen Alkohol verestert. Für den Fall, dass das Veresterungsprodukt in Stufe b) einen Oligoester enthält, ist es notwendig, dass der zur Veresterung angesetzte aliphatische Alkohol mindestens zwei Hydroxyfunktionalitäten aufweist. Der Oligoester stellt somit ein Kondensationsprodukt aus einer aliphatischen Dicarbonsäure und einem aliphatischen Alkohol mit mindestens zwei Hydroxfunktionalitäten, bevorzugt zwei Hydroxfunktionalitäten, dar, der mindestend zwei Wiederholungseinheiten aufweist. Bevorzugt weist der Oligoester weniger als 50 Wiederholungseinheiten auf.

Das erfindungsgemäße Verfahren geht somit nicht ausschließlich von monomeren Bestandteilen, d.h. z.B. einer Dicarbonsäure und einem Diol aus, sondern verwendet bereits ein Veresterungsprodukt, das mit einer Mischung oder in idealer Weise einer Lösung der entsprechenden Dicarbonsäuren und Diolen umgesetzt wird. Erfindungsgemäß wird unter einem Veresterungsprodukt ein Stoff oder ein Stoffgemisch verstanden, das zumindest einen Diester aus den zuvor genannten monomeren Bestandteilen, d.h. Dicarbonsäure und Diol, enthält. Daneben kann das Veresterungsprodukt jedoch auch weitere Bestandteile umfassen, wie beispielsweise Monoester der Dicarbonsäure und des Dialkohols bzw. Oligomere aus der Dicarbonsäure und dem Dialkohol.

Die sich anschließende Polykondensation bzw. Copolykondensation (Stufe c)) kann dabei so erfolgen, dass das in Stufe b) erhaltene Reaktionsprodukt ohne Zugabe weiterer Komponenten einer ein- oder mehrstufigen Polykondensationsreaktion zugeführt wird.

Jedoch ist ebenso die Zugabe weiterer, bereits in den Stufen a) und/oder b) eingesetzten Monomeren und/oder Oligomeren möglich. Hierbei können die gleichen Monomere bzw. Oligomere verwendet werden, so dass ein Homopolymer entsteht, aber auch hiervon abweichende Monomere eingesetzt werden, so dass Copolymere entstehen.

Auch können in der Polykondensationsstufe andere Monomere, wie z.B. aromatische Diole , aromatische Dicarbonsäuren, oder auf Isocyanaten beruhende Kettenverlängerer etc, zugegeben werden.

Der wesentliche Vorteil des erfindungsgemäßen Verfahrens liegt darin, dass durch den Einsatz des Veresterungsproduktes sowie der Verwendung einer Lösung der aliphatischen Dicarbonsäure in einem aliphatischen Diol eine raschere und vollständige Reaktion der zugeführten Rohstoffe miteinander ermöglicht wird. Dadurch kann eine wesentliche Effizienzsteigerung des erfindungsgemäßen Verfahrens erzielt werden.

Weitere Vorteile des erfindungsgemäßen Verfahrens sind dabei:

- Es wird keine "unstabile" Paste sondern eine homogene Lösung verwendet: Die Lösung ist "lagerstabil", d.h. es tritt keine Sedimentation der eingesetzten Dicarbonsäure, z.B. Bernsteinsäure, mehr auf.

- Es kann "ungemahlene" Bernsteinsäure verwendet werden. Kommerzielle erhältliche Bernsteinsäure ist häufig grob kristallin und muß, damit eine weitgehend sedimentationsstabile und problemlos förderbare Paste hergestellt werden kann, erst gemahlen werden. Die ist ein weiterer Prozessschritt, der Energie erfordert. Zudem wird Wegfall dieser Prozessstufe das Austreten von reizenden Bernsteinsäurestäuben wirksam unterbunden

- Es wird keine Zirkulationsleitung benötigt (siehe JP 2010202,770 oder andere kommerzielle Anlagen z.B. bei der PET Produktion.

- Es können "einfachere" Pumpen verwendet werden, da es sich um eine reine Flüssigdosierung handelt; Pastenpumpen sind in der Technik häufig kritisch, es muss die Fördergenauigkeit gegen das Blockieren der Pumpe abgewogen werden. Bei zu geringen Spaltmaßen werden daher gerne Verstopfung der Pumpe, bei Stillstand der Pumpenförderung auch Verstopfungen der verbackende Dicabonsäuren beobachtet.

- Es kann das warmes/heißes Butandiol, wie es aus dem Sumpf der Prozesskolonne zurückerhalten wird, ohne allzu aufwändige Kühlung wiederverwendet werden, woraus eine Energieersparnis resultiert. Zudem wird Butandiol häufig vor der Zugabe in den Pastenansatzbehälter auf eine ausreichend hohe Temperatur z.B. mittels Faßerhitzern erwärmt, damit sie überhaupt gefördert werden kann (Schmelzpunkt ca. 20°C). Auch dieses damit schon vorgewärmte Butandiol ist somit vorteilhaft im Sinne der Anmeldung. Es ist nur noch eine geringere Temperaturdifferenz bis zu Lösetemperatur für die Dicarbonsäure aufzubringen.

- Durch den Einsatz einer Lösung können die Wärmetauscherflächen in der Veresterungsstufe kleiner gehalten werden bzw. diese mit geringerer Heizleistung betrieben werden. Dadurch ist eine effektivere Auslegung der ersten Reaktionsstufe (Veresterung) möglich, da weniger Energieeintrag als zum Erwärmen einer Paste auf Reaktionstemperatur (typischerweise > 160°C) notwendig ist.

- Überraschenderweise weisen die so gemäß dem erfindgungsgemäßen Verfahren hergestellten Polyester oder Copolyester eine wesentlich höhere finale Viskosität, verglichen mit auf andere Art und Weise hergestellten Polyestern bzw. Copolyestern auf.

- Eine vergleichbare Vorgehensweise ist im PET, PBT Prozess nicht durchführbar, da sich Terephthalsäure nicht in Alkoholen / Dialkoholen löst.

PBS kann in einer 2-stufigen Reaktion aus Bernsteinsäure und Butandiol hergestellt werden. Im Prinzip ist das Verfahren identisch zur Herstellung von PBT (dort wird anstelle von Bernsteinsäure Terephthalsäure verwendet) oder PET (Terephthalsäure sowie Ethylenglykol als Rohstoffe).

Die Erfindung wird im Folgenden beispielhaft an den dargestellten Reaktionsschemata näher dargestellt.

<u>Herstellung des Veresterungsproduktes:</u>

z.B. die Veresterung von Bernsteinsäure mit Butandiol:

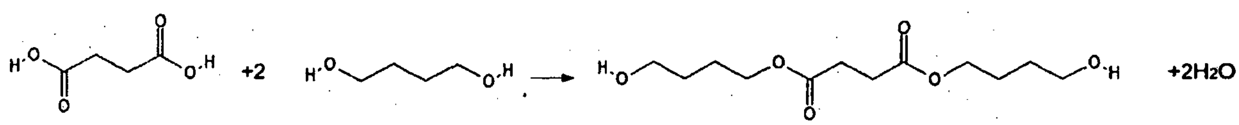

Bei der stöchiometrischen Umsetzung von einem Mol Bernsteinsäure mit zwei Mol Butandiol (BDO) entsteht das Zwischenprodukt Bis-Hydroxybutylensuccinat. In der Realität werden jedoch ein breites Spektrum an Oligomeren und Monomeren sowie auch ein Rest aus nicht oder nur teilweise umgesetzter Bernsteinsäure erhalten.

Üblicherweise hierbei verwendete Reaktionsbedingungen sind:

- Temperatur: 140-250°C
- Druck: atmosphärisch oder leichter Unter-/ oder Überdruck
- Molverhältnis: BDO/Bernsteinsäure = 1,0-2,5:1,0
- Katalysator: Zur Verringerung der Nebenproduktbildung können zur Veresterung der Bernsteinsäure schon Katalysatoren zugegeben, z.B. Ti- oder Sn-basierend.

Als Nebenprodukt entsteht primär das Kondensationsprodukt Wasser. Dieses kann über eine Kolonne aus der Reaktionsmischung abdestilliert werden. Spuren von mitgerissenem BDO können dabei ebenfalls abgetrennt und bevorzugt der Veresterung wieder zugeführt werden. Daneben entsteht in einer Nebenreaktion in geringem Maße aus BDO durch cyclisierende Etherbildung unter Wasserabspaltung Tetrahydrofuran THF (insbesondere abhängig von der Temperatur, Überschuss von BDO und gegebenenfalls auch Katalysator (Art, Menge), welches ebenfalls abgetrennt werden kann.

Gemäß US 6,399,716 werden Veresterungsbedingungen > 240° für aliphatische Prepolymere als kritisch betrachtet, da hierbei Abbaureaktionen, wie Decarboxylierung (Abspaltung von $CO_2$) auftritt. Bei Temperaturen < 160 °C ist das Entfernen von Wasser aus der Reaktionsmischung schwierig. Als ideales Molverhältnis wird der Bereich 1:1,3 bis 1:1,4 angesehen. Bei einem Verhältnis von < 1:15 nimmt die Reaktivität ab und die Farbe wird bräunlich. Bei einem Molverhältnis > 1:2,0 nehmen die Produktionskosten sehr stark zu.

<u>Schema der Polykondensation von Bis-Hydroxybutylensuccinat zu PBS:</u>

Das Veresterungspdrodukt stellt dabei bevorzugt das Reaktionsmedium dar.

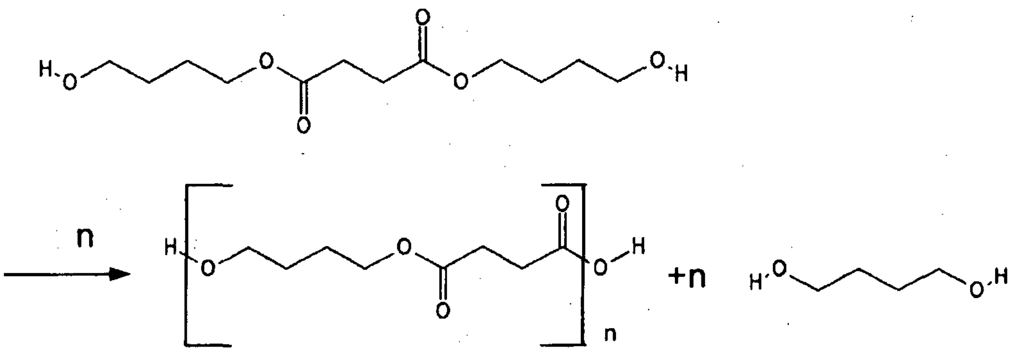

Üblicherweise hierbei verwendete Reaktionsbedingungen sind:

- Temperatur: 200-250°C
- Druck: 0,1-100 mbar
- Katalysator: Ti- oder Sn-basierend.

<u>Nebenprodukte:</u>

Bei der Polykondensation des Bis-hydroxybutylensuccinats entsteht das Kondensationsprodukt Butandiol, das nach entsprechender Aufreinigung wieder in den Prozess u.a. zur Herstellung der Lösung der aliphatischen Dicarbonsäure eingeschleust werden kann. Daneben kann noch freies oder als Kondensationsprodukt abgespaltenes BDO zu THF umgewandelt, umso mehr, je höher die Temperatur der Polykondensation ist. Das THF muss vom BDO abgetrennt und aufgereinigt werden und kann, bei entsprechender Reinheit, als Wertprodukt verkauft werden. Des Weiteren kann die Bildung von linearen Ethern aus Butandiol (vergleichbar der Bildung von DEG aus EG)sowie die Bildung von Bernsteinsäureanhydrid durch Wasserabspaltung aus Bernsteinsäure nicht ausgeschlossen werden.

<u>Rohstoffe für die PBS-Herstellung:</u>

Die erfindungsgemäß eingesetzten Rohstoffe, also die aliphatischen Dicarbonsäuren mit 2 bis 12 Kohlenstoffatomen bzw. hiervon abgeleitete Säureanhydride sowie die aliphatischen Alkohole mit 2 bis 12 Kohlenstoffatomen und mindestens 2 Hydroxylfunktionalitäten, sind prinzipiell petrochemisch, häufig aber auch biochemisch darstellbar. Insbesondere Bernsteinsäure (aber auch andere Dicarbonsäuren) sowie Butandiol (und weitere Diole) lassen sich aus nachwachsenden Rohstoffen erhalten; diese auf nachwachsender Rohstoffbasis hergestellten Edukte eignen sich ebenfalls als Materialen, die beim erfindungsgemäßen Verfahren zum Einsatz kommen können.

Zudem können zu den einzelnen Reaktionsstufen, insbesondere zu Stufe c) weitere Additive, gegebenenfalls auch reaktive Additive, zugegeben werden. Insbesondere eignen sich Kettenverlängerer, Comonomere, Katalysatoren, ähnliche Polymere sowie weiter Additive, die im Folgenden beispielhaft erläutert werden.

Kettenverlängerer

Aus diversen Patenten und Literaturstellen ist bekannt, dass PBS häufig erst nach einem Kettenverlängerungsschritt (u.a. aliphatische Diisocynate oder Diphenylcarbonat, Bisoxazoline) seine endgültigen Eigenschaften (Polymer mit ausreichend hohen Molmassen für die Weiterverarbeitung) erhält. In der Regel sinkt aber die Bioabbaubarkeit bei der Verwendung der Kettenverlängerer. Diisocynanate bergen zudem das Problem, dass cancerogene Diamaine während des Abbaus entstehen können. Bei der Verwendung von Diphenylcarbonat entsteht giftiges Phenol als Kondensationsprodukt. Verbleiben nicht oder nur teilweise reagierte Kettenverlängerer im Produkt, bergen sie ebenfalls Gesundheitsgefahren, z.B. durch Freisetzung bei der Weiterverarbeitung. Aber auch ohne die Verwendung von Kettenverlängerern sind hohe Molmassen in der Polykondensation erreichbar. Es sollte explizit erläutert werden, dass es das Ziel dieser Anmeldung ist, auf die KV zu verzichten - sie dennoch an einem gem. der Ansprüche hergestellten Prepolymer möglich ist.

Comonomere

Aus diversen Patenten und Literaturstellen ist bekannt, dass PBS häufig mit Comonomeren versehen wird, um seine Eigenschaften zu verbessern. Comonomere können hierbei z.B. Verzweigungskomponenten sein, wie z.B. mehrwertige Carbonsäuren (Propantricarbonsäure, Pyromellitsäure, oder Säureanhydride sowie mehrwertige Alkohole (Glycerin, Trimethylolpropan, Pentaerythrith etc.). Insbesondere sollen die Kettenverzweigungen die Verarbeitungseigenschaften, z.B. beim Filmblasen, verbessern. Um einer Gelbildung vorzubeugen, sollte der Anteil an Verzweigungskomponenten < 1 Mol-% sein.

Additive

Aus diversen Patenten ist bekannt, dass Additive (z.B. phosphorhaltige Stabilisatoren, wie Phosphorsäure oder phosphorige Säure) bei der Herstellung von PBS zugegeben werden. Aus US 6,399,716 geht hervor, dass bei einem Gehalt von < 0,02 Gew.-% Stabilisator die Farbe des Produkts gelb/braun wird, während bei einem Gehalt > 2 Gew.-% der Reaktionsfortschritt ungenügend sei. Daneben können eine Reihe weiterer Additive zugegeben werden, wie z.B. Hitzestabilisatoren, Antioxidantien, Nukleierungsmittel, Flammschutzmittel, Antistatika, Verarbeitungshilfsmittel, UV-Stabilisatoren sowie Verstärkungsmaterialien oder Füllstoffe.

Katalysatoren

In der Regel können die üblichen für Polykondensationen geeigneten Katalysatoren (Lewis-Säuren) verwendet werden. Insbesondere geeignet sind verschiedene Ti- oder Zr-Katalysatoren, desweiteren auch Ge, Sn, V, Mo, A1 etc. sowie Mischungen. Hohe Konzentrationen an Katalysatoren werden häufig benötigt, um entsprechende Raum-/Zeitausbeuten zu erreichen. Andererseits werden hohe Katalysatorkonzentrationen kritisch diskutiert in Zusammenhang mit Färbung sowie mit einer geringen Hydrolysestabilität der erhaltenen Polymere. Werden "starke Säuren" für die Katalyse der Polykondensationsreaktion eingesetzt (Sulfonsäuren, Phosphorsäure etc.), werden auch hier eine erhöhte Hydrolyseanfälligkeit sowie auch eine erhöhte THF-Bildungsrate kritisch beobachtet.

Ähnliche Polymere

Das Ausgangsmaterial für diese Klasse der PBS-Polymeren ist die C4-Dicarbonsäure (Succinic Acid bzw. Bernsteinsäure). Diese lässt sich mittlerweile gut anhand biochemischer Methoden herstellen. Das wichtigste Produkt dieser Klasse ist das PBS (Polybutylensuccinat, aus Bernsteinsäure und 1,4-Butandiol). Daneben gibt es Succinate, bei denen ein Teil der Bernsteinsäure durch Adipinsäure (PBSA) oder durch Terephthalsäure ersetzt ist (PBST) bzw. bei denen ein Teil des 1,4-Butandiol durch Ethylenglykol (PEBS) ersetzt ist. Darüber hinaus sind weitere Polyester denkbar, bei denen die Alkoholkomponenten komplett durch Ethylenglykol (Polyethylensuccinat, PES), 1,3-Propandiol (Polypropylensuccinat, PPS) oder 1,6-Hexandiol (Polyhexylensuccinat, PHS) ersetzt sind. Vergleichbar der Reihe der Polyamide sinken die Schmelzpunkte der Polybernsteinsäureester in der Regel mit längeren Kettenlängen der Diole. So hat z.B. PES einen Schmelzpunkt von 100 °C, PBS von 118 °C und PHS von 52 °C. Für PBST werden Schmelzpunkte von 138 bis 180 °C (50-70 % Anteil an Terephthalsäure) berichtet.

Eigenschaften von PBS

PBS zeichnet sich durch folgende Eigenschaften aus:

- Unlöslichkeit in Wasser, Alkohol, Aceton, Ether etc.,
- gute Barriereeigenschaften gegenüber Sauerstoff,
- für viele Anwendungen ausreichende Sperrwirkung gegen Wasserdampf und Alkohol,
- gute mechanische Eigenschaften, ausreichende Stabilität,
- breites Verarbeitungsfenster im Spritzguss, Extrusion, und Faserherstellung,
- Bioabbaubarkeit

PBS kann gut alleine oder auch zusammen mit anderen bioabbaubaren Polymeren auf Standardspritzgussmaschinen (160-200 °C) verarbeitet werden.

Prinzipiell ist das Eigenschaftsniveau von PBS vergleichbar mit dem von PP bzw. Folien aus HDPE oder auch zu Polystyrol. Verwendung findet PBS bislang für Nahrungsmittelverpackungen, Agrarhilfsmittel (Blumentöpfe, Mulchfolien etc.), Medizinanwendungen, Kosmetika sowie Automobilteile oder als Hartschaum für Verpackungsanwendungen. In einem Schmelzspinnprozess lassen sich aus PBS Fasern herstellen. Es ist zudem bekannt, dass für eine bessere Verarbeitbarkeit z.B. in Folienblasprozessen, Comonomere sowie insbesondere Verzweigungskomponenten in die Makromolekülstruktur des PBS eingebaut werden Häufig werden auch zur Verbesserung der Eigenschaften und insbesondere zur Verringerung des Preises Blends von PBS mit anderen Polymeren, z.B. Polyadipate, oder Stärke eingesetzt. Prinzipiell kann PBS in vielen Anwendungen eingesetzt werden, bei denen bislang PET und PP verwendet wurden.

Insbesondere die Tatsache, dass PBS komplett aus nachwachsenden Rohstoffen herstellbar ist ("green", sustainable") und sich gut als Folie im Lebensmittelverpackungssektor einsetzen lässt, sind als Vorteile zu nennen.

Eine bevorzugte Ausführungsform des erfindungsgemäßen Verfahrens sieht vor, dass die Lösung in Schritt a) bei Temperaturen von 100°C bis 180°C hergestellt wird. Dabei wird weiter bevorzugt die aliphatische Dicarbonsäure in dem aliphatischen Alkohol unter Rühren aufgelöst. Beispielsweise kann der entsprechende Alkohol in flüssiger Form bei den genannten Temperaturen vorgelegt und die aliphatische Dicarbonsäure darin aufgelöst werden. Ebenso ist jedoch möglich, die Dicarbonsäure vorzulegen und durch Zugabe des Alkohols und mechanischer Agitation, beispielsweise Rühren, eine entsprechende homogene Lösung herzustellen.

Eine weitere bevorzugte Ausführungsform des erfindungsgemäßen Verfahrens sieht vor, dass das Veresterungsprodukt den Diester zu mindestens 10 Gew.-%, bevorzugt von 20 bis 98 Gew.-%, weiter bevorzugt von 40 bis 95 Gew.-%, besonders bevorzugt von 60 bis 90 Gew.-%, enthält.

Wie bereits oben definiert, ist der Diester dabei als Kondensationsprodukt einer aliphatischen Dicarbonsäure mit mindestens einem aliphatischen Alkohol zu verstehen. Bevorzugt ist der Diester (und gegebenenfalls ebenso der Oligoester) dabei aus den gleichen aliphatischen Dicarbonsäuren und aliphatischen Alkoholen, wie sie in Stufe a) des erfindungsgemäßen Verfahrens verwendet werden, abgeleitet.

Weiter ist es bevorzugt, wenn das Veresterungsprodukt, das wie oben bereits erwähnt ein Gemisch verschiedener Rohstoffe darstellen kann, neben dem Diester Oligomere aus der mindestens einen Dicarbonsäure und dem mindestens einen Alkohol mit durchschnittlich 2 bis 10, bevorzugt 3 bis 6 Wiederholungseinheiten, enthält.

Alternativ und ebenso bevorzugt ist es jedoch ebenso möglich, als Veresterungsprodukt den oben genannten Diester als Reinstoff einzusetzen.

In einer weiter bevorzugten Ausführungsform beträgt in Stufe a) das stöchiometrische Verhältnis der Gesamtheit der mindestens einen aliphatischen Dicarbonsäure mit 2 bis 12 Kohlenstoffatomen und/oder hiervon abgeleiteten Säureanhydriden zur Gesamtheit des mindestens einen aliphatischen Alkohols mit 2 bis 12 Kohlenstoffatomen von 1:0,5 bis 1:5,0, bevorzugt von 1:0,9 bis 1:3,0, besonders bevorzugt 1:1,1 bis 1:2,0.

In einer weiteren vorteilhaften Ausführungsform des erfindungsgemäßen Verfahrens beträgt das Gewichtsverhältnis des Veresterungsprodukts zur Gesamtheit der zugeführten Lösung aus mindestens einer aliphatischen Dicarbonsäure mit 2 bis 12 Kohlenstoffatomen und/oder hiervon abgeleiteten Säureanhydriden in den mindestens einen aliphatischen Alkohol mit 2 bis 12 Kohlenstoffatomen von 1:0,5 bis 1:20, bevorzugt von 1:1 bis 1:5.

Bevorzugte Reaktionstemperaturen, die während Schritt b) eingehalten werden, liegen dabei zwischen 120 und 300 °C, bevorzugt zwischen 160 und 250 °C.

Um die Ausbeute zu erhöhen, werden vorzugsweise während Schritt b) und/oder im Anschluss an Schritt b) Nebenprodukte, die bei Normalbedingungen ab 60°C oder höheren Temperaturen dampfförmig vorliegen, insbesondere Wasser sowie Tetrahydrofuran, beispielsweise durch Destillation zumindest partiell oder ganz entfernt.

Die Stufe c) kann dabei als eine einzige Polykondensationsstufe ausgebildet sein. Insbesondere ist es vorteilhaft, wenn die Poly- oder die Copolykondensationsstufe c) zweistufig ausgeführt wird. Die Poly- oder die Copolykondensationsstufe wird dabei in zwei Schritte, einen ersten Schritt $c_1$) und ein Schritt $c_2$) aufgeteilt, wobei in die erste Stufe $c_1$) das aus Stufe b) erhaltene Reaktionsprodukt aufgegeben wird. Durch Polykondensationsreaktion bzw. Copolykondensationsreaktion wird dabei das aus Stufe b) erhaltene Reaktionsprodukt in ein Polyesterprepolymer oder Copolyesterprepolymer überführt. Im zweiten Schritt $c_2$) der Poly- oder Copolykondesationsstufe c) wird das aus Schritt $c_1$) hergestellte Produkt durch Polykondensationsreaktion oder Copolykondensationsreaktion in den Polyester bzw. Copolyester überführt.

Mit zunehmenden Reaktionsfortschritt durch die beiden Stufen $c_1$) und $c_2$) wird das die Stufen durchlaufende Reaktionsgemisch bevorzugt mit abnehmenden Drücken und steigenden Temperaturen beaufschlagt.

Insbesondere ist es dabei vorteilhaft, wenn Schritt $c_1$) unter gegenüber Normalbedingungen vermindertem Druck, bevorzugt bei einem Druck von 5 mbar bis 900 mbar, weiter bevorzugt von 10 mbar bis 700 mbar, insbesondere von 30 mbar bis 300 mbar, durchgeführt wird. Die Tempeatur im Schritt c1 beträgt dabei bevorzugt zwischen 160 und 300°C, weiter bevorzugt zwischen 200 und 260°C und besonders bevorzugt zwischen 230 und 250°C.

Alternativ oder zusätzlich hierzu ist es möglich, dass der Schritt $c_2$) bei Temperaturen von 200 und 300 °C, bevorzugt von 220 bis 270 °C und besonders bevorzugt zwischen 230 und 260°C durchgeführt wird. Der Schritt c2 wird unter gegenüber Normaldruck vermindertem Druck durchgeführt, bevorzugt bei einem Druck von 0,1 mbar bis 30 mbar, weiter bevorzugt von 0,2 mbar bis 10 mbar, insbesondere von 0,4 mbar bis 5 mbar,

Weiterhin können sich noch eine oder mehrere Polykondensationsstufen nach der zuvor beschriebenen Stufe $c_2$) anschließen.

Weiter ist bevorzugt, dass beim erfindungsgemäßen Verfahren ein Katalysator zugegeben wird.

Insbesondere ist dabei von Vorteil, wenn vor und/oder während der Durchführung des Schrittes b) und/oder c) mindestens ein Katalysator, bevorzugt ein schwermetallfreier Katalysator, besonders bevorzugt ein Titan-haltiger Katalysator, insbesondere Titanalkoholate und/oder von organischen Säuren abgeleitete Titansalze, wie z.B. Titanoxalat, Titancitrat und/oder Titanlactat, oder Antimonacetat, zum in der jeweiligen Stufe vorliegenden Reaktionsgemisch gegeben wird.

Der Katalysator kann dabei z.B. während der Stufe b) zugegeben werden. Ebenso ist es möglich, dass der Katalysator während des Schrittes c) zugegeben wird, , z.B. auch jeweils in die Stufen $c_1$) und/oder $c_2$). Weiter ist es möglich, dass der Katalysator bereits vor der ersten Stufe zugegeben wird, dies kann beispielsweise bei der Herstellung des Veresterungsproduktes erfolgen, auf die nachfolgend näher eingegangen wird. Zudem ist es möglich, dass die Gesamtmenge an Katalysator auf die verschiedenen Stufen verteilt wird. Besonders bevorzugt dabei ist beispielsweise, wenn während der Herstellung des Veresterungsprodukt und während des Schrittes b) Katalysator aufgegeben wird. Eine weitere Zugabe von Katalysator kann während des Schrittes c) kann erfolgen.

Als besonders bevorzugter Titanalkoholat-Katalysator kann beispielsweise Titantetrabutylat (TiTB) oder Bis-titan-[tetra(hydroxypropyl)ethylendiamin] (siehe nachfolgende Formel), das unter dem Handelsnamen "LAC 2000" vertrieben wird, zugegeben werden.

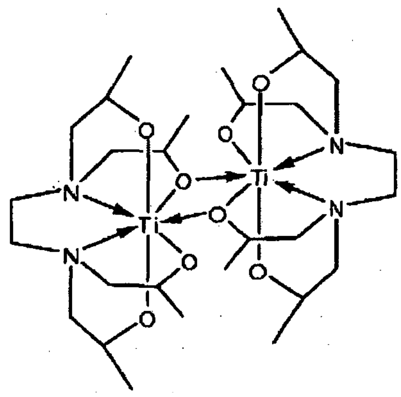

Ein weiterer bevorzugter Katalysator ist dabei Antimonacetat.

Bevorzugte Mengenkonzentrationen, in denen der oder die Katalysatoren zum jeweiligen Reaktionsgemisch gegeben werden, betragen dabei z.B. in Stufe b) 10 bis 20.000 ppm, bevorzugt 100 bis 5.000 ppm. Die Gewichtsangaben beziehen sich dabei jeweils auf die ursprünglich eingesetzte Gewichtssumme aus sämtlichen aliphatischen Dicarbonsäuren, aliphatischen Alkoholen und Veresterungsprodukt. Die angegebene Gewichtsmenge des zugesetzten Katalysators ist dabei die Gesamtmenge an Katalysator, die während des gesamten Verfahrens aufgegeben wird. Sollte daher der Katalysator verteilt auf mehrere Stufen aufgegeben werden (beispielsweise für den Fall, dass Stufe c) mehrstufig ausgeführt wird), addieren sich die Gesamtgewichtsmengen der aufgegebenen Menge an Katalysator zu den zuvor genannten Gewichtsmengen. Sollte der Katalysator bereits vor Stufe a) zugegeben werden, beispielsweise in der Stufe, in der das Veresterungsprodukt hergestellt wird, wird die später einzusetzende Menge an Dicarbonsäuren bzw. Dialkoholen bereits mit für die Berechnung der Mengenkonzentration des Katalysators verwendet. Bevorzugte Katalysatormengen, die in Stufe c) in aufgegebenen werden können betragen dabei z.B. Stufe c) in einer Mengenkonzentration von 10 bis 20.000 ppm, bevorzugt von 100 bis 5.000 ppm, bezogen auf das aus Stufe b) erhaltene Reaktionsprodukt zugegeben wird.

Eine weiter bevorzugte Ausführungsform des erfindungsgemäßen Verfahrens sieht vor, dass vor und/oder

während der Durchführung des Schrittes c) mindestens ein Cokatalysator und/oder mindestens ein Stabilisator zum Prepolymer gegeben wird.

Für den Fall, dass die Polykondensationsstufen c) mehrstufig, beispielsweise wie oben beschrieben, in Form einer Prekondensationsstufe $c_1$) und eine Hauptkondesationsstufe $c_2$) aufgeführt wird, kann die Zugabe des Cokatalysators und/oder des Stabilisators in eine jede dieser Stufen $c_1$) und $c_2$) erfolgen; ebenso ist es auch möglich, dass die Aufgabe von Cokatalysator und/oder des mindestens einen Stabilisators in nur eine der beiden Stufen erfolgt. Ebenso ist es möglich, dass der Cokatalysator in eine und der Stabilisator in einer anderen Stufe aufgegeben wird.

Bevorzugt ist die mindestens eine aliphatische Dicarbonsäure ausgewählt aus der Gruppe bestehend aus Bernsteinsäure, Oxalsäure, Malonsäure, Glutarsäure, Adipinsäure, Pimelinsäure, Korksäure, Azelainsäure, Sebacinsäure, Undecansäure, Dodecansäure, 3,3-Dimethylpentandisäure, deren Anhydriden und/oder Mischungen hiervon, besonders bevorzugt ist die Bernsteinsäure.

Ebenso vorteilhaft ist es, wenn der mindestens eine Alkohol ausgewählt ist aus der Gruppe bestehend aus Ethylenglycol, Diethylenglycol, Triethylenglycol, Propylenglycol, Dipropylenglycol, 1,3-Butandiol, 1,4-Butandiol, 3-Methyl-1,5-pentandiol, 1,6-Hexandiol, 1,7-Heptandiol, 1,8-Octandiol, 1,9-Nonandiol, Neopentylglycol, 1,4-Cyclohexandimethanol und/oder Kombinationen oder Mischungen hieraus. Besonders bevorzugt ist das 1,4-Butandiol.

Gemäß dem erfindungsgemäßen Verfahren kann dabei eine der zuvor genannten bevorzugten Dicarbonsäuren mit einem der zuvor genannten bevorzugten Dialkohole umgesetzt werden.

Ebenso ist es jedoch möglich, dass eine Kombination aus zwei oder mehr der zuvor genannten Dicarbonsäuren mit lediglich einem oder auch mehreren der zuvor genannten Dialkohole umgesetzt wird. Andererseits kann auch eine einzelne Dicarbonsäuren mit einer Mehrzahl der zuvor genannten vorteilhaft einzusetzenden Dialkohole gemäß dem erfindungsgemäßen Verfahren zur Reaktion gebracht werden.

In einer weiteren bevorzugten Ausführungsform wird

a) das in Schritt b) erzeugte Reaktionsprodukt auf eine intrinsische Viskosität (I.V.) von 0,04 bis 0,12, bevorzugt von 0,05 bis 0,10, besonders bevorzugt von 0,06 bis 0,08 und/oder

b) der in Schritt c) insbesondere der in Schritt $c_2$) erzeugte Polyester auf eine intrinsische Viskosität (I.V.) von 0,6 bis 2,0, bevorzugt von 0,8 bis 1,6, besonders bevorzugt von 1,0 bis 1,4

eingestellt.

Die I.V.-Bestimmung erfolgt dabei folgendermaßen: Es erfolgt zunächst die Bestimmung der Durchflusszeit t einer Lösung der Probe im Lösungsmittel Chloroform in einer Konzentration c von 1.0 g/dL mittels eines Viskosimeters des Typs Ubbelohde (Kapillare 0c gem. DIN 51562) bei einer Temperatur von 20°C. Daraus berechnet sich die relative Lösungsviskosität $\eta_{rel}$ aus dem Verhältnis der Durchflusszeit t zur Druchflusszeit t0 des reinen Lösungsmittels im identischen Viskosimeter bei ebenfalls 20°C:

$$\eta_{rel} = t/t_0$$

Aus der relativen Lösungsviskosität kann die Berechnung der I.V. bzw. intrinsische Viskosität $\eta_{intr}$ gemäß der Berechungsformel nach Solomon-Ciuta erfolgen:

$$\eta_{intr} = \frac{1}{c}\sqrt{2 \cdot (\eta_{rel} - 1 - \ln \eta_{rel})}$$

wobei hierfür die Konzentration c der Lösung mit 1,0 g/dL anzugeben ist.

Besonders bevorzugt ist es, wenn mit dem erfindungsgemäßen Verfahren PBS, d.h. das Polykondensat aus Bernsteinsäure und Butandiol, hergestellt wird. Insofern ist der im Veresterungsprodukt bevorzugt enthaltene Diester Bis(4-hydroxybutyl)butandioat.

Alternativ und ebenso bevorzugt lässt sich mit dem erfindungsgemäßen Verfahren Polyethylensuccinat herstellen. Insofern wird hierbei als Dicarbonsäure Bernsteinsäure und als Dialkohol Ethylenglycol verwendet. Der im Veresterungsprodukt enthaltene Diester ist dabei Bis(4-hydroxyethyl)butandioat.

Die zuvor genannte Bernsteinsäure kann dabei auf Rohölbasis hergestellt sein, ebenso ist es jedoch möglich, dass auf nachwachsenden Rohstoffen basierende Bernsteinsäure eingesetzt oder eine Mischung von rohölbasierender und auf nachwachsenden Rohstoffen basierender Bernsteinsäure eingesetzt wird.

Das erfindungsgemäß in Stufe b) verwendete Veresterungsprodukt lässt sich bevorzugt durch Kondensation

der mindestens einen aliphatischen Dicarbonsäure und hiervon abgeleiteten Säureanhydriden mit 2 bis 12 Kohlenstoffatomen mit dem mindestens einen aliphatischen Alkohol mit 2 bis 12 Kohlenstoffatomen und mindestens zwei Hydroxylfunktionalitäten herstellen.

Hierbei ist es von Vorteil, wenn die Kondensation des Veresterungsprodukt unmittelbar vor Durchführung von Stufe b) und/oder parallel und zeitgleich zur Stufe a) erfolgt.

Eine weiter bevorzugte Ausführungsform sieht vor, dass bei der Herstellung des Veresterungsprodukts das stöchiometrische Verhältnis der Gesamtheit der mindestens einen Dicarbonsäure mit 2 bis 12 Kohlenstoffatomen und/oder hiervon abgeleiteten Säureanhydriden zur Gesamtheit des mindestens einen aliphatischen Alkohols mit 2 bis 12 Kohlenstoffatomen von 1:0,5 bis 1:5,0, bevorzugt von 1:0,9 bis 1:3,0, besonders bevorzugt 1:1,1 bis 1:2,0 beträgt.

Die vorliegende Erfindung wird anhand der nachfolgenden Ausführungsformen und Beispiele näher erläutert, ohne die Erfindung auf die dort dargestellten speziellen Parameter zu beschränken.

In den nachfolgenden Versuchen wurden 4 verschiedene Methoden überprüft, eine Paste bzw. eine Lösung aus Bernsteinsäure und BDO (Molverhältnis 1:1,5 SAC/BDO) zu einem Monomer/Veresterungsprodukt zu verestern. Es sollte dabei untersucht werden, welche Parameter die besten Resultate liefern. Dabei werden die Auswirkungen untersucht, die die Zugabe von der Paste oder Lösung auf die intrinsische Viskosität des Endprodukts haben. Alle anderen Bedingungen (Mengen, Art des vorgelegten Monomers, Temperatur etc.) sowie insbesondere die Menge des zugegebenen Katalysators sollten gleich gehalten werden:

Folgende Versuche wurden durchgeführt:

a) Direkte Veresterung von Bernsteinsäure mit BDO ohne Vorlage von Veresterungsprodukt (V1) - entsprechend dem Stand der Technik bei der batchweisen Herstellung von aliphatischen Polyestern.

b) Veresterung, wobei die gesamte Paste zusammen mit dem Veresterungsprodukt vorgelegt wird (V2)

c) Versterung, wobei die Paste als Suspension langsam dem Veresterungsprodukt zugeführt wird (V3) - gemäß dem bisherigen Stand der Technik bei der kontinuierlichen Herstellung von aliphatischen Polyestern

Veresterung wobei die Paste als Lösung dem vorgelegten Veresterungsprodukt zugetropft wird (V4) - gemäß des Anspruchs 1 der Patentanmeldung

Für die Untersuchung b), c) und d) wurde ein vorab hergestelltes Veresterungsprodukt verwendet (Molverhältnis 1:1,3; 406 ppm Ti; I.V. = 0,071 dL/g, nicht umgesetzte Carboxylendgruppen = 23,8 mmol/kg). Hierfür wurden in einem 5 L Edelstahlrektor 270 g eines vorab hergestellten Veresterungsproduktes (ca. 375 ppm Ti, IV = 0,06 dL/g) mit 4,65 g LAC 2000 vorgelegt. Der Reaktor wurde mittels eines Ölbades (190°C) auf aufgeheizt. Nachdem eine Innentemperatur von 166°C erreicht worden war ($t_0$), wurden 945 g Bernsteinsäure und 937 g BDO (Molverhältnis 1 : 1,3) als Paste langsam über einen Zeitraum von ca. 4 - 5 h zugegeben. Über die bei 100°C betriebene Kolonne wurden die Brüden abgetrennt und das überdestillierende Wasser aufgefangen. 7 Stunden nach Beginn der Zugabe von Paste wurde das Veresterungsprodukt (V0) aus dem Reaktionsgefäß in eine Wanne abgelassen und abgekühlt.

Von diesem Veresterungsprodukt VO wurden nun jeweils 50 g (V1: 0 g) sowie ca. 490 mg des Katalysators LAC 2000 in einem 500 mL Dreihalskolben mit aufgesetzter Kolonne und Rückflußkühler vorgelegt. In V2 wurde bereits die gesamte Menge der Paste (94,5 g SAC und 108,1 g BDO (Molverhältnis 1: 1,5) zusammen mit dem Veresterungsprodukt und dem Katalysator vorgelegt. Bei einer Temperatur von 190°C wurde der Kolben mit der Reaktionsmischung/Edukten unter N2-Überleitung in das vorgeheizte Heizmedium abgesenkt und der Rührer gestartet. Zum vorgelegten Monomer wurden in V3 und V4 nun 94,5 g SAC und 108,1 g BDO (Molverhältnis 1: 1,5) als Paste bzw. Lösung langsam über einen Zeitraum 120 min zugeführt. Für V3 war die Paste bei Raumtemperatur (25°) aus einem Vorlagegefäß mittels einer Peristaltikpumpe zugeführt, für V4 war die Bernsteinsäure zuvor bei 120°C unter Rühren gelöst worden und wurde anschließend aus einem mit 100°C temperierten Tropftrichter zugetropft. Über die bei 100°C betriebene Kolonne wurden die entstandenen Brüden abgetrennt und das überdestillierende Wasser nach Kühlung aufgefangen. 6,5 h nach Absenken des Kolbens in das Heizbad wurden die nachfolgenden Veresterungsprodukte erhalten.

| Versuch | Vorgelegtes VE-Produkt | BS [g] | BDO [g] | MV | Kat. | Menge Kat. [mg] |
|---|---|---|---|---|---|---|
| V1 | 0g | 94,5 | 108,1 | 1:1,5 | LAC2000 | 491 |
| V2 | 50g (V0) | 94,5 | 108,1 | 1:1,5 | LAC2000 | 491 |
| V3 | 50g (Vo) | 94,5 | 108,1 | 1:1,3 | LAC2000 | 491 |
| V4 | 50g (V0) | 94,5 | 108,1 | 1:1,5 | LAC2000 | 491 |

| Versuch | $H_2O$ (überdestilliert) [mL] | Ausbeute [%] H2O | Nicht umgesetze Carboxylgruppen [mmol/kg] | I.V. [dL/g] | Ausbeute [%] VE-Produkt |
|---|---|---|---|---|---|
| V1 | 25,5 | 88,5 | 17,6 | 0,072 | 97,8 |
| V2 | 23,5 | 81,1 | 5,9 | 0,088 | 98,8 |
| V3 | 25,5 | 88,5 | 15,1 | 0,080 | 92,0 |
| V4 | 25, 0 | 86,8 | 25 | 0,070 | 97,9 |

Abkürzungen:

- BS = Bernsteinsäure
- BDO = 1,4-Butandiol
- MV = Mischungsverhältnis (mol/mol)
- Kat. = Katalysator
- I.V. = intrinsische Viskosität

Für die nachfolgenden Polykondensationsreaktionen wurden jeweils ca. 60 g eines jeden der zuvor hergestellten Veresterungsproduktes in jeweils eine Labor-Glas-Polykondensationsapparatur gegeben. Nach Erreichen einer Temperatur von 190°C wurde die Apparatur mit dem Veresterungsprodukt unter N2-Überleitung in ein Heizbad abgesenkt. Ca. 15 Minuten später wurde der Rührer eingeschaltet und Vakuum angelegt und der Druck langsam abgesenkt sowie die Solltemperatur für das Heizbad auf 230°C erhöht. Weitere15 Minuten später wurde das Endvakuum von ca. 0,5 - 1,5 mbar erreicht und beibehalten. Sechs Stunden nach Beginn des Anlegens des Vakuums wurde Stickstoff auf die Apparatur gegeben und die Proben erhalten.

| Versuch | COOH [mmol/kg] | I.V. [dL/g] |
|---|---|---|
| V1 | 0,5 | 0,759 |
| V2 | 2,8 | 0,817 |
| V3 | 2,0 | 1,317 |
| V4 | 5,2 | 1, 617 |

Bei den Versuchen konnte gezeigt werden, dass die Vorlage von Veresterungsprodukt bei der Herstellung eines anschließend gut für das spätere Erreichen von hohen Molmassen bei PBS geeigneten Veresterungsproduktes es vorteilhaft ist. Ohne Vorlage von Veresterungsprodukt (V1 gem. a) wurde dagegen bei der nachfolgenden Polykondensation nur die geringste Molmasse beim PBS erreicht.

Ein gute Molmasse für das PBS wird erreicht, wenn bei der Herstellung des Veresterungsproduktes eine Mischung von Bernsteinsäure mit Butandiol bereits zusammen mit dem Veresterungsprodukt vorgelegt wurde (V2 gem. b). Noch besser war das Ergebnis, wenn die Paste als Suspension langsam zum vorgelegten Veresterungsprodukt zugegeben wurde (V3 gem. c)). Diese Vorgehensweise wurde jedoch noch von der Zugabe der "Paste" in gelöster Form (V4 gem. d)) - und damit entsprechend der erfindungsgemäßen Vorgehensweise - übertroffen.

Die vorliegende Erfindung wurde ebenso bereits in einem nachfolgend beschriebenen Technikumsversuch realisiert.

In einer Pilotanlage (Aufbau gem. der Uhde Inventa-Fischer Patentanmeldungen EP 1 448 658 bzw. WO 2007/140925) wurde ein Lösung von Bernsteinsäure in Butandiol hergestellt, indem in einen auf 120°C vorbeheizten Pastenanmischbehälter zunächst 534 kg Butandiol (vorgewärmt auf 130°C, Zugabe aus einem auf 130°C beheizten Lagertank) gegeben wurden. Nachfolgend wurden nun 400 kg Bernsteinsäure über einen Zeitraum von 2 Stunden zum BDO gleichmäßig und unter Rühren zugegeben. Nach weiteren 2 Stunden war die Bersteinsäure vollständig gelöst und die Lösung wurde in einen auf 120°C vorgeheizten Pastenvolagebehälter abgelassen. Von dort wurde die Lösung von Bersteinsäure in Butandiol kontinuierlich mittels einer Dosierpumpe einem Veresterungreaktor zugeführt. Hierin befindet sich Veresterungsprodukt in einem Naturumlauf, wobei die aus dem Wärmetauscher austretende Mischung von in BDO gelöster Bernsteinsäure mit Veresterungsprodukt auf eine Temperatur von 220°C eingestellt wird. Die Veresterung wurde einem Druck von 1000 mbar betrieben. In die Veresterungsstufe wurde der in bei Raumtemperatur flüssig vorliegenden Katalysator zudosiert, sodass im Endprodukt ein Gehalt von 350 ppm aktivem Ti erreicht wird. Die Zugabe

und Entnahme von Veresterungsprodukt werden so geregelt, dass eine mittlere Verweilzeit von 2 Stunden in der Veresterungsstufe resultiert. Das bei der Veresterung anfallende Wasser wird über Kopf abgezogen und einer Trennkolonne zugeführt. In ihr werden Wasser und das Azetrop aus Wasser und dem als Nebenprodukt entstehenden THF von mitüberdestilliertem Butandiol abgetrennt. Das im Sumpf der Kolonne entnommene Butandiol wird auf eine Temperatur von 130 °C abgekühlt und dem beheizten Butandiollagertank zugeführt. Das am Sumpf des Veresterungsstufe entnommene Veresterungsprodukt wird mittels einer Schmelzepumpe in Nachveresterungsstufe überführt. Der Zulauf und Ablauf in die Nachveresterung ist so geregelt, dass eine mittlere Verweilzeit von 90 Minuten in der Nachveresterungsstufe eingehalten wird. Die Temperatur in der Nachveresterungsstufe beträgt 230°C, es herrscht ein Druck von 500 mbar. Das am Sumpf der Nachveresterungsstufe entnommene Produkt wird mittels einer Schmelzepumpe in die Prepolymerisationsstufe (Stufe c1) überführt. Der Zulauf und Ablauf in die Prepolymerisationsstufe ist so geregelt, dass eine mittlere Verweilzeit von 120 Minuten in der Prepolymerisationsstufe eingehalten wird. Die Temperatur in der Prepolymerisationsstufe beträgt dabei 240°C, es herrscht ein Druck von 15 mbar. Das am Sumpf des Prepolymerisationsstufe entnommene Prepolymer wird mittels einer Schmelzepumpe in den Polykondensationsreaktor (Stufe c2) überführt. Der Zulauf und Ablauf in den Polykondensationsreaktor ist so geregelt, dass eine mittlere Verweilzeit von 90 Minuten während der Polykondensation eingehalten wird. Die Temperatur in der Polykondenationsstufe beträgt dabei 240°C, es herrscht ein Druck von 1,5 mbar. Die bei der Polykondensation entstehenden Dämpfe von Butandiol, Reste von Wasser und THF werden ebenfalls der Trennkolonnen zugeführt. Die Ausführung des Polykondensationsreaktors entspricht dabei der UIF Patentanmeldung .... Über die am Austritt des Polykondensationsreaktors angebrachte Schmelzepumpe wird die Schmelze mit einem Fluß von 40 kg/h einer Unterwassergranuliereinheit zugeführt. Nach dem Abschleudern von Wasser wird PBS-Granulat mit einem I.V. Wert von 1,10 dL/g und einem Farbwert b* von 7 erhalten.

**Patentansprüche**

1. Verfahren zur Herstellung eines Polyesters oder Copolyesters, bei dem

   a) mindestens eine aliphatische Dicarbonsäure mit 2 bis 12 Kohlenstoffatomen und/oder hiervon abgeleitete Säureanhydride und mindestens ein aliphatischer Alkohol mit 2 bis 12 Kohlenstoffatomen und mindestens zwei Hydroxylfunktionalitäten vermischt werden und mittels einer geeigneten Temperaturerhöhung die Di-carbonsäure im Dialkohol gelöst wird, wobei die Lösung bei Temperaturen von 100°C bis 250°C hergestellt wird,
   b) die in Schritt a) erhaltene Lösung zu einem mindestens einen Diester und/oder mindestens einen Oligoester enthaltenden Veresterungsprodukt, das aus mindestens einer aliphatischen Dicarbonsäure mit mindestens einem aliphatischen Alkohol erhalten wurde, gegeben und dort zur Reaktion gebracht wird, und
   c) das aus Stufe b) erhaltene Reaktionsprodukt unter gegenüber Normalbedingungen vermindertem Druck polykondensiert oder copolykondensiert wird.

2. Verfahren nach Anspruch 1, **dadurch gekennzeichnet, dass** die Lösung in Schritt a) bei Temperaturen von 100°C bis 180°C hergestellt wird.

3. Verfahren nach einem der vorhergehenden Ansprüche, **dadurch gekennzeichnet, dass** das Veresterungsprodukt den Diester zu mindestens 10 Gew.-%, bevorzugt von 20 bis 98 Gew.-%, weiter bevorzugt von 40 bis 95 Gew.-%, besonders bevorzugt von 60 bis 90 Gew.-% enthält.

4. Verfahren nach einem der vorhergehenden Ansprüche, **dadurch gekennzeichnet, dass** das Veresterungsprodukt neben dem Diester Oligomere aus der mindestens einen Dicarbonsäure und dem mindestens einen Alkohol mit durchschnittlich 2 bis 10, bevorzugt 3 bis 6 Wiederholungseinheiten enthält.

5. Verfahren nach einem der vorhergehenden Ansprüche, **dadurch gekennzeichnet, dass** in Stufe a) das stöchiometrische Verhältnis der Gesamtheit der mindestens einen aliphatischen Dicarbonsäure mit 2 bis 12 Kohlenstoffatomen und/oder hiervon abgeleiteten Säureanhydriden zur Gesamtheit des mindestens einen aliphatischen Alkohols mit 2 bis 12 Kohlenstoffatomen von 1:0,5 bis 1:5,0, bevorzugt von 1:0,9 bis 1:3,0, besonders bevorzugt 1:1,1 bis 1:2,0 beträgt.

6. Verfahren nach einem der vorhergehenden Ansprüche, **dadurch gekennzeichnet, dass** das Gewichtsverhältnis des Veresterungsproduktes zur Summe der zugeführten Lösung aus mindestens einer aliphatischen Dicarbonsäure mit 2 bis 12 Kohlenstoffatomen und/oder hiervon abgeleiteten Säureanhydriden in dem mindestens einen aliphatischen Alkohol mit 2 bis 12 Kohlenstoffatomen und mindestens zwei Hydroxyfunktionalitäten von 1:0,5 bis 1:20, bevorzugt von 1:1 bis 1:5 beträgt.

**7.** Verfahren nach einem der vorhergehenden Ansprüche, **dadurch gekennzeichnet, dass** die Reaktion in Schritt b) bei Temperaturen von 120 bis 300 °C, bevorzugt von 160 bis 250 °C durchgeführt wird.

**8.** Verfahren nach einem der vorhergehenden Ansprüche, **dadurch gekennzeichnet, dass** während Schritt b) und/oder im Anschluss an Schritt b) Nebenprodukte, die bei Normalbedingungen ab 60 °C oder bei höheren Temperaturen dampfförmig vorliegen, insbesondere Wasser, zumindest partiell oder ganz entfernt werden.

**9.** Verfahren nach einem der vorhergehenden Ansprüche, **dadurch gekennzeichnet, dass** die Poly- oder Copolykondensationsstufe c) zweistufig ausgeführt wird, wobei in einem ersten Schritt $c_1$) aus dem aus Stufe b) erhaltenen Reaktionsprodukt durch Polykondensation oder Copolykondensation ein Polyesterprepolymer oder Copolyesterprepolymer hergestellt und in einem sich anschließenden Schritt $c_2$) aus dem Polyesterprepolymer oder Copolyesterprepolymer aus Schritt $c_1$) durch Polykondensation oder Copolykondensation der Polyester oder Copolyester erhalten wird.

**10.** Verfahren nach vorhergehendem Anspruch, **dadurch gekennzeichnet, dass**

a) Schritt $c_1$)

i. unter gegenüber Normalbedingungen vermindertem Druck, bevorzugt bei einem Druck von 5 mbar bis 900 mbar, weiter bevorzugt von 10 mbar bis 700 mbar, insbesondere von 30 mbar bis 300 mbar, und/oder
ii. bei Temperaturen von 160 bis 300 °C, bevorzugt von 200 bis 260 °C, und/oder

b) Schritt $C_2$)

i. unter gegenüber Normalbedingungen vermindertem Druck, bevorzugt bei einem Druck von 0,1 mbar bis 30 mbar, weiter bevorzugt von 0,2 mbar bis 10 mbar, insbesondere von 0,4 mbar bis 5 mbar, und/oder
ii. bei Temperaturen von 200 bis 300 °C, bevorzugt von 220 bis 270°C,

durchgeführt wird.

**11.** Verfahren nach einem der vorhergehenden Ansprüche, **dadurch gekennzeichnet, dass** vor und/oder während des Durchführens des Schrittes b) und/oder c) mindestens ein Katalysator, bevorzugt ein schwermetallfreier Katalysator, besonders bevorzugt ein Titan-haltiger Katalysator, insbesondere Titanalkoholate und/oder von organischen Säuren abgeleitete Titansalze, wie z.B. Titanoxalat, Titancitrat und/oder Titanlactat, oder Antimonacetat oder zinnorganische Verbindung, zum in der jeweiligen Stufe vorliegenden Reaktionsgemisch gegeben wird.

**12.** Verfahren nach vorhergehendem Anspruch, **dadurch gekennzeichnet, dass** der Katalysator

a) in Stufe b) in einer Mengenkonzentration von 10 bis 20.000 ppm, bevorzugt von 100 bis 5.000 ppm, bezogen auf die Gewichtssumme aus aliphatischer Dicarbonsäure, aliphatischem Alkohol und Veresterungsprodukt zugegeben wird und/oder
b) in Stufe c) in einer Mengenkonzentration von 10 bis 20.000 ppm, bevorzugt von 100 bis 5.000 ppm, bezogen auf das aus Stufe b) erhaltene Reaktionsprodukt zugegeben wird.

**13.** Verfahren nach einem der vorhergehenden Ansprüche, **dadurch gekennzeichnet, dass** vor und/oder während der Durchführung des Schrittes c) mindestens ein Cokatalysator und/oder mindestens ein Stabilisator zum Reaktionsgemisch, insbesondere zum Prepolymer und/oder Polymer gegeben wird.

**14.** Verfahren nach einem der vorhergehenden Ansprüche, **dadurch gekennzeichnet, dass**

a) die mindestens eine aliphatische Dicarbonsäure ausgewählt ist aus der Gruppe bestehend aus Bernsteinsäure, Oxalsäure, Malonsäure, Glutarsäure, Adipinsäure, Pimelinsäure, Korksäure, Azelainsäure, Sebacinsäure, Undecansäure, Dodecansäure, 3,3-Dimethyl-pentandisäure, deren Anhydriden und/oder Mischungen hiervon und/oder
b) der mindestens eine Alkohol ausgewählt ist aus der Gruppe bestehend aus Ethylenglycol, Diethylenglycol, Triethylenglycol, Propylenglycol, Dipropylenglycol, 1,3-Butandiol, 1,4-Butandiol, 3-Methyl-1,5-pentandiol, 1,6-Hexandiol, 1,7-Heptandiol, 1,8-Octandiol, 1,9-Nonandiol, Neopentylglycol, 1,4-Cyclohexandimethanol und/oder Kombinationen oder Mischungen hieraus.

**15.** Verfahren nach einem der vorhergehenden Ansprüche, **dadurch gekennzeichnet, dass**

a) das in Schritt b) erzeugte Reaktionsprodukt auf eine intrinsische Viskosität (I.V.) von 0,04 bis 0,12, bevorzugt von 0,05 bis 0,10, besonders bevorzugt von 0,06 bis 0,08 und/oder
b) der in Schritt c), insbesondere der in Schritt $c_2$) erzeugte Polyester auf eine intrinsische Viskosität (I.V.) von 0,60 bis 2,0, bevorzugt von 0,80 bis 1,60, besonders bevorzugt von 1,0 bis 1,40 eingestellt wird.

**16.** Verfahren nach einem der vorhergehenden Ansprüche, **dadurch gekennzeichnet, dass**

a) der aliphatische Polyester Polybutylensuccinat, die aliphatische Dicarbonsäure Bernsteinsäure, der aliphatische Alkohol 1,4-butandiol und der Diester Bis(4-hydroxybutyl)butandioat, oder
b) der aliphatische Polyester Polyethylensuccinat, die aliphatische Dicarbonsäure Bernsteinsäure, der aliphatische Alkohol Ethylenglycol und der Diester Bis(4-hydroxyethyl)-butandioat

ist.

**17.** Verfahren nach einem der vorhergehenden Ansprüche, **dadurch gekennzeichnet, dass** das Veresterungsprodukt durch Kondensation der mindestens einen aliphatischen Dicarbonsäure und hiervon abgeleiteten Säureanhydriden mit 2 bis 12 Kohlenstoffatomen mit dem mindestens einen aliphatischen Alkohol mit 2 bis 12 Kohlenstoffatomen und mindestens zwei Hydroxylfunktionalitäten hergestellt wird.

**18.** Verfahren nach vorhergehendem Anspruch, **dadurch gekennzeichnet, dass** bei der Herstellung des Veresterungsproduktes das stöchiometrische Verhältnis der Gesamtheit der mindestens einen Dicarbonsäure mit 2 bis 12 Kohlenstoffatomen und/oder hiervon abgeleiteten Säureanhydriden zur Gesamtheit des mindestens einen aliphatischen Alkohols mit 2 bis 12 Kohlenstoffatomen von 1:0,5 bis 1:5,0, bevorzugt von 1:0,9 bis 1:3,0, besonders bevorzugt 1:1,1 bis 1:2,0 beträgt.

## Claims

**1.** Method for the production of a polyester or copolyester, in which

a) at least one aliphatic dicarboxylic acid having 2 to 12 carbon atoms and/or acid anhydrides derived therefrom and at least one aliphatic alcohol having 2 to 12 carbon atoms and at least two hydroxyl functions are mixed and the dicarboxylic acid is dissolved in dialcohol by means of a suitable temperature increase, wherein the solution is produced at temperatures of 100°C to 250°C,
b) the solution obtained in step a) is added to an esterification product containing at least one diester and/or at least one oligoester which was obtained from at least one aliphatic dicarboxylic acid with at least one aliphatic alcohol, and is made to react there, and
c) the reaction product obtained from step b) is polycondensed or copolycondensed at reduced pressure compared to normal conditions.

**2.** Method according to claim 1, **characterised in that** the solution in step a) is produced at temperatures of 100°C to 180°C.

**3.** Method according to one of the preceding claims, **characterised in that** the esterification product contains the diester at at least 10% b.w., preferably from 20 to 98% b.w., more preferably from 40 to 95% b.w., particularly preferably from 60 to 90% b.w.

**4.** Method according to one of the preceding claims, **characterised in that**, as well as the diester, the esterification product contains oligomers from the at least one dicarboxylic acid and the at least one alcohol with an average of 2 to 10, preferably 3 to 6 repeating units.

**5.** Method according to one of the preceding claims, **characterised in that**, in step a), the stoichiometric ratio of the total of the at least one aliphatic dicarboxylic acid having 2 to 12 carbon atoms and/or acid anhydrides derived therefrom relative to the total of the at least one aliphatic alcohol having 2 to 12 carbon atoms is from 1:0.5 to 1:5.0, preferably from 1:0.9 to 1:3.0, particularly preferably from 1:1.1 to 1:2.0.

6. Method according to one of the preceding claims, **characterised in that** the weight ratio of the esterification product relative to the sum of the added solution of at least one aliphatic dicarboxylic acid having 2 to 12 carbon atoms and/or acid anhydrides derived therefrom in the at least one aliphatic alcohol having 2 to 12 carbon atoms and at least two hydroxy functions is from 1:0.5 to 1:20, preferably from 1:1 to 1:5.

7. Method according to one of the preceding claims, **characterised in that** the reaction in step b) is carried out at temperatures of 120 to 300°C, preferably 160 to 250°C.

8. Method according to one of the preceding claims, **characterised in that**, during step b) and/or after step b), by-products that exist in a vapour state under normal conditions from 60°C or at higher temperatures, in particular water, are at least partially or entirely removed.

9. Method according to one of the preceding claims, **characterised in that** the poly or copolycondensation step c) is designed to be in two parts, wherein, in a first step c1), a polyester prepolymer or copolyester prepolymer is produced from the reaction product obtained from step b) by polycondensation or copolycondensation and, in a subsequent step c2), the polyester or copolyester is obtained from the polyester prepolymer or copolyester prepolymer from step c1) by polycondensation or copolycondensation.

10. Method according to the preceding claim, **characterised in that**,

a) step c1)

i. is carried out at a pressure that is reduced compared to normal conditions, preferably at a pressure of 5mbar to 900mbar, more preferably from 10mbar to 700mbar, in particular from 30mbar to 300mbar, and/or
ii. at temperatures of 160 to 300°C, preferably from 200 to 260°C, and/or

b) step c2)

i. is carried out at a pressure that is reduced compared to normal conditions, preferably at a pressure of 0.1 mbar to 30mbar, more preferably from 0.2mbar to 10mbar, in particular from 0.4mbar to 5mbar, and/or
ii. at temperatures of 200 to 300°C, preferably from 220 to 270°C.

11. Method according to one of the preceding claims, **characterised in that**, before and/or while step b) and/or c) is carried out, at least one catalyst, preferably a catalyst that is free of heavy metals, particularly preferably a catalyst containing titanium, in particular titanium alcoholates and/or titanium salts that are derived from organic acids, such as titanium oxalate, titanium citrate and/or titanium lactate, or antimony acetate or an organostannic compound, is added to the reaction mixture that is present in the respective step.

12. Method according to the preceding claim, **characterised in that** the catalyst

a) in step b), is added at a volume concentration of 10 to 20,000 ppm, preferably from 100 to 5,000 ppm, relative to the sum of the weight of aliphatic dicarboxylic acid, aliphatic alcohol and esterification product, and/or
b) in step c), is added at a volume concentration of 10 to 20,000 ppm, preferably from 100 to 5,000 ppm, relative to the reaction product obtained from step b).

13. Method according to one of the preceding claims, **characterised in that**, before and/or while step c) is carried out, at least one cocatalyst and/or at least one stabiliser is added to the reaction mixture, in particular to the prepolymer and/or polymer.

14. Method according to one of the preceding claims, **characterised in that**,

a) the at least one aliphatic dicarboxylic acid is selected from the group consisting of succinic acid, oxalic acid, malonic acid, glutaric acid, adipic acid, pimelic acid, suberic acid, azelaic acid, sebacic acid, undecanoic acid, dodecanoic acid, 3,3-dimethylpentanoic acid, anhydrides thereof and/or mixtures hereof, and/or
b) the at least one alcohol is selected from the group consisting of ethylene glycol, diethylene glycol, triethylene glycol, propylene glycol, dipropylene glycol, 1,3-butanediol, 1,4-butanediol, 3-methyl-1,5-pentanediol, 1,6-hexanediol, 1,7-heptanediol, 1,8-octanediol, 1,9-nonanediol, neopentyl glycol, 1,4-cyclohexane dimethanol and/or combinations or mixtures thereof.

**15.** Method according to one of the preceding claims, **characterised in that**,

a) the reaction product produced in step b) is adjusted to an intrinsic viscosity (IV) level of 0.04 to 0.12, preferably from 0.05 to 0.10, particularly preferably from 0.06 to 0.08, and/or
b) the polyester produced in step c), in particular in step c2), is adjusted to an intrinsic viscosity (IV) level of 0.60 to 2.0, preferably from 0.80 to 1.60, particularly preferably from 1.0 to 1.40.

**16.** Method according to one of the preceding claims, **characterised in that**,

a) the aliphatic polyester is polybutylene succinate, the aliphatic dicarboxylic acid is succinic acid, the aliphatic alcohol is 1,4-butanediol and the diester is bis(4-hydroxybutyl)butanedioate, or
b) the aliphatic polyester is polyethylene succinate, the aliphatic dicarboxylic acid is succinic acid, the aliphatic alcohol is ethylene glycol and the diester is bis(4-hydroxyethyl)butanedioate.

**17.** Method according to one of the preceding claims, **characterised in that** the esterification product is produced by condensation of the at least one aliphatic dicarboxylic acid and acid hydrides derived therefrom having 2 to 12 carbon atoms with the at least one aliphatic alcohol having 2 to 12 carbon atoms and at least two hydroxyl functions.

**18.** Method according to the preceding claim, **characterised in that**, during the production of the esterification product, the stoichiometric ratio of the total of the at least one dicarboxylic acid having 2 to 12 carbon atoms and/or acid hydrides derived therefrom relative to the total of the at least one aliphatic alcohol having 2 to 12 carbon atoms is from 1:0.5 to 1:5.0, preferably from 1:0.9 to 1:3.0, particularly preferably from 1:1.1 to 1:2.0.

## Revendications

**1.** Procédé de préparation d'un polyester ou d'un copolyester, dans lequel

a) on mélange au moins un acide dicarboxylique aliphatique ayant 2 à 12 atomes de carbone et/ou des anhydrides d'acides qui en dérivent et au moins un alcool aliphatique ayant 2 à 12 atomes de carbone et au moins deux fonctionnalités hydroxyle, et, grâce à une élévation appropriée de la température, on dissout l'acide dicarboxylique dans le dialcool, la solution étant préparée à des températures de 100 à 250°C,
b) on ajoute la solution obtenue lors de l'étape a) à un produit d'estérification contenant au moins un diester et/ou au moins un oligoester, produit qui a été obtenu à partir d'au moins un acide dicarboxylique aliphatique et d'au moins un alcool aliphatique, et on l'y fait réagir, et
c) on procède à une polycondensation ou à une copolycondensation du produit de réaction obtenu lors de l'étape b), sous une pression diminuée par comparaison aux conditions normales.

**2.** Procédé selon la revendication 1, **caractérisé en ce qu'**on prépare la solution de l'étape a) à des températures de 100 à 180°C.

**3.** Procédé selon l'une des revendications précédentes, **caractérisé en ce que** le produit de l'estérification contient le diester en une quantité d'au moins 10 % en poids, de préférence de 20 à 98 % en poids, d'une manière plus préférée de 40 à 95 % en poids, d'une manière particulièrement préférée de 60 à 90 % en poids.

**4.** Procédé selon l'une des revendications précédentes, **caractérisé en ce que** le produit de l'estérification contient, en plus du diester, des oligomères du ou des acides dicarboxyliques et du ou des alcools ayant en moyenne 2 à 10, de préférence 3 à 6 motifs répétitifs.

**5.** Procédé selon l'une des revendications précédentes, **caractérisé en ce que**, lors de l'étape a), le rapport stoechiométrique de la totalité du ou des acides dicarboxyliques aliphatiques ayant 2 à 12 atomes de carbone et/ou des anhydrides d'acide qui en dérivent, à la totalité du ou des alcools aliphatiques ayant 2 à 12 atomes de carbone, est de 1:0,5 à 1:5,0, de préférence de 1:0,9 à 1:3,0, d'une manière particulièrement préférée de 1:1,1 à 1:2,0.

**6.** Procédé selon l'une des revendications précédentes, **caractérisé en ce que** le rapport en poids du produit de l'estérification à la somme de la solution amenée du ou des acides dicarboxyliques aliphatiques ayant 2 à 12 atomes de carbone et/ou des anhydrides d'acide qui en dérivent, est dans le ou les alcools aliphatiques ayant 2 à 12 atomes de carbone et au moins deux fonctionnalités hydroxyle, de 1:0,5 à 1:20, de préférence de 1:1 à 1:5.

7. Procédé selon l'une des revendications précédentes, **caractérisé en ce que** la réaction de l'étape d) est mise en oeuvre à des températures de 120 à 300°C, de préférence de 160 à 250°C.

8. Procédé selon l'une des revendications précédentes, **caractérisé en ce que**, pendant l'étape b) et/ou après l'étape b), les sous-produits qui sont présents sous forme vapeur dans les conditions normales à partir de 60°C ou à des températures plus élevées, en particulier l'eau, sont éliminés au moins partiellement, ou en totalité.

9. Procédé selon l'une des revendications précédentes, **caractérisé en ce que** l'étape de poly- ou de copolycondensation c) est mise en oeuvre en deux étapes, auquel cas, dans une première étape $c_1$), on prépare à partir du produit de réaction obtenu dans l'étape b), par polycondensation ou copolycondensation, un prépolymère de polyester ou un prépolymère de copolyester, et, dans une étape $c_2$) réalisée ensuite, on prépare à partir du prépolymère de polyester ou du prépolymère de copolyester de l'étape $c_1$), par polycondensation ou copolycondensation, le polyester ou le copolyester.

10. Procédé selon la revendication précédente, **caractérisé en ce qu'**on met en oeuvre

a) l'étape $c_1$)

i. sous une pression diminuée par comparaison avec les conditions normales, de préférence sous une pression de 5 mbar à 900 mbar, d'une manière plus préférée de 10 mbar à 700 mbar, en particulier de 30 mbar à 300 mbar, et/ou
ii. à des températures de 160 à 300°C, de préférence de 200 à 260°C, et/ou

b) l'étape $c_2$)

i. sous une pression diminuée par comparaison aux conditions normales, de préférence sous une pression de 0,1 mbar à 30 mbar, d'une manière plus préférée de 0,2 mbar à 10 mbar, en particulier de 0,4 mbar à 5 mbar, et/ou
ii. à des températures de 200 à 300°C, de préférence de 220 à 270°C.

11. Procédé selon l'une des revendications précédentes, **caractérisé en ce que**, avant et/ou pendant la mise en oeuvre de l'étape b) et/ou de l'étape c), on ajoute au mélange réactionnel présent dans l'étape considérée au moins un catalyseur, de préférence un catalyseur exempt de métaux lourds, d'une manière particulièrement préférée un catalyseur contenant du titane, en particulier des alcoolates de titane et/ou des sels de titane dérivant d'acides organiques, tels par exemple que l'oxalate de titane, le citrate de titane et/ou le lactate de titane, ou de l'acétate d'antimoine ou un composé organique de l'étain.

12. Procédé selon la revendication précédente, **caractérisé en ce que** le catalyseur

a) lors de l'étape b), est ajouté selon une concentration pondérale de 10 à 20 000 ppp, de préférence de 100 à 5000 ppm, par rapport au poids total de l'acide dicarboxylique aliphatique, de l'alcool aliphatique et du produit de l'estérification, et/ou
b) lord de l'étape c), est ajouté selon une proportion pondérale de 10 à 20 000 ppm, de préférence de 100 à 5000 ppm, par rapport au produit de réaction obtenu dans l'étape b).

13. Procédé selon l'une des revendications précédentes, **caractérisé en ce que**, avant et/ou pendant la mise en oeuvre de l'étape c), on ajoute au mélange réactionnel, en particulier au prépolymère et/ou au polymère, au moins un cocatalyseur et/ou au moins un stabilisant.

14. Procédé selon l'une des revendications précédentes, **caractérisé en ce que**

a) le ou les acides dicarboxyliques aliphatiques sont choisis dans le groupe consistant en l'acide succinique, l'acide oxalique, l'acide malonique, l'acide glutarique, l'acide adipique, l'acide pimélique, l'acide subérique, l'acide azélaïque, l'acide sébacique, l'acide undécanoïque, l'acide dodécanoïque, l'acide 3,3-diméthyl-pentanedioïque, les anhydrides et/ou mélanges de ceux-ci, et/ou
b) le ou les alcools sont choisis dans le groupe consistant en l'éthylèneglycol, le diéthylèneglycol, le triéthylèneglycol, le propylèneglycol, le dipropylèneglycol, le 1,3-butanediol, le 1,4-butanediol, le 3-méthyl-1,5-pentanediol, le 1,6-hexanediol, le 1,7-heptanediol, le 1,8-octanediol, le 1,9-nonanediol, le néopentylglycol, le 1,4-cyclohexanediméthanol et/ou les combinaisons ou mélanges de ceux-ci.

**15.** Procédé selon l'une des revendications précédentes, **caractérisé en ce que**

a) le produit de réaction obtenu dans l'étape b) est ajusté à une viscosité intrinsèque (I.V.) de 0,04 à 0,12, de préférence de 0,05 à 0,10, d'une manière particulièrement préférée de 0,06 à 0,08 et/ou
b) le polyester produit dans l'étape c), en particulier dans l'étape $c_2$), est ajusté à une viscosité intrinsèque (I.V.) de 0,60 à 2,0, de préférence de 0,80 à 1,60, d'une manière particulièrement préférée de 1,0 à 1,40.

**16.** Procédé selon l'une des revendications précédentes, **caractérisé en ce que**

a) le polyester aliphatique est le poly(succinate de butylène), l'acide dicarboxylique aliphatique est l'acide succinique, l'alcool aliphatique est le 1,4-butanediol, et le diester est le butanedioate de bis(4-hydroxybutyle), ou
b) le polyester aliphatique est le poly(succinate d'éthylène), l'acide dicarboxylique est l'acide succinique, l'alcool aliphatique est l'éthylèneglycol et le diester est le butanedioate de bis(4-hydroxyéthyle).

**17.** Procédé selon l'une des revendications précédentes, **caractérisé en ce que** le produit de l'estérification est préparé par condensation du ou des acides dicarboxyliques aliphatiques et des anhydrides d'acide qui en dérivent, ayant 2 à 12 atomes de carbone, avec le ou les alcools aliphatiques ayant 2 à 12 atomes de carbone et au moins deux fonctionnalités hydroxyle.

**18.** Procédé selon la revendication précédente, **caractérisé en ce que**, lors de la préparation du produit de l'estérification, le rapport stoechiométrique de la totalité du ou des acides dicarboxyliques ayant 2 à 12 atomes de carbone et/ou des anhydrides d'acide qui en dérivent à la totalité du ou des alcools aliphatiques ayant 2 à 12 atomes de carbone est de 1:0,5 à 1:5,0, de préférence de 1:0,9 à 1:3,0, d'une manière particulièrement préférée de 1:1,1 à 1:2,0.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2012267 A
- US 2071250 A
- US 20060155099 A1
- US 6399716 B2
- EP 1882712 A1
- US 20100305297 A1
- JP 2010254812 A
- JP 2010202770 A
- JP 2010202770 B
- US 6399716 B
- EP 1448658 A
- WO 2007140925 A


### In der Beschreibung aufgeführte Nicht-Patentliteratur


- **W.H. CAROTHERS.** *u.a. Chem. Reviews,* 1931, vol. 8, 353-401